Europäisches Patentamt

**European Patent Office**

**Office européen des brevets**

(11) Publication number: **0 121 678**
**A1**

## (12) EUROPEAN PATENT APPLICATION

(21) Application number: **84101273.5**

(22) Date of filing: **08.02.84**

(51) Int. Cl.³: **H 01 M 4/36**, **H 01 M 4/58**
**// C23C13/00**

(30) Priority: **01.04.83 US 481139**

(43) Date of publication of application: **17.10.84**
**Bulletin 84/42**

(84) Designated Contracting States: **DE FR GB**

(71) Applicant: **International Business Machines Corporation, Old Orchard Road, Armonk, N.Y. 10504 (US)**

(72) Inventor: **MacInnes, Robert Donald, 232 Lonetown Road, West Redding Connecticut 06896 (US)**

(74) Representative: **Ahlman, Bertel et al, IBM Svenska AB Box 962, S-18 109 Lidingö (SE)**

(54) **Battery electrode.**

(57) Battery electrode materials are described which have superior resistance to destructive corrosion of an electrode formed from such material and which comprise suitable amorphous metal alloys, such as (FeB)Cr, FeSi, CoTi, MiB, PbZn, ZnB, FeC, FeBe, MgZn, AgB, AgP, AgC, FeB, etc.

EP 0 121 678 A1

0121678

## Battery Electrode

This invention relates to metallic battery electrodes of longer life. The battery industry now employs a wide variety of metals and metal alloys as electrodes in various types of batteries and there is a continuous search for improved electrode materials that will contribute to extended battery life without the sacrifice of other properties.

According to the present invention it is proposed to improve battery life by utilizing as electrode materials metallic alloys to which constituents are added to impart an amorphous (non-crystalline) structure to the metallic electrode material.

U.S. Patent 4,207,245, Halbert, discloses metallic compounds useful as battery electrodes (cathodes), e.g., intercalates of the structure $MX_aY_b(Z)_c$ in which M is Ti, Va, Cr, Mn, Fe or In and X and Y are chalcogenides or halides; Z is an organometallic compund. The compounds are disclosed as being useful for a number of applications, including as battery cathodes. A material within the scope of the Halbert disclosure is $FeS_aCl_b$ where a and b vary from 0 to 2 and a + b is about 2. Halbert does not suggest the production of amorphous materials.

A variety of metallic electrode materials is disclosed in U.S. Patent 2,013,379, Drumm. These include nickel-iron and cobalt-iron alloys to which may be added Cr, Mo, W, Mg, Zn, Cd, Cg, Mn, Va, or Ta. According to the Drumm patent 0.15% C and 0.2% Si may be alloyed with FeNi and FeNiCr, but these are mere traces of C and Si and there is no teaching of an amorphous material being produced.

None of the foregoing references has observed or disclosed the subject matter of this invention which provides battery electrode material which is expected to exhibit longer life when utilized in batteries.

The present invention is disclosed in the attached claims.

According to this invention a battery electrode is prepared by employing amorphous metal alloys as electrode materials. Improved performance in terms of longer electrode life and therefore longer battery life is expected to result from the fact that the amorphous structure produces a uniform, fine pattern of corrosion, as opposed to irregular corrosive attack at cyrstal grain boundaries and sites of crystal defects. As a result, during the process of electrode dissolution the surface of the metallic electrode materal remains smooth and the structural and functional integrity of the electrode is extended. The invention is not limited to particular amorphous metallic alloys. While the seldtion of a particular alloy system will depend on many factors including battery type, electrode structure, electrolyte composition, etc., the following are illustrative of alloys which are believed to be suitable:

| (FeB) Cr | PbZn | MgZn |
| FeSi | ZnB | AgB |
| CoTi | FeC | AgP |
| NiB | FeBe | AgC |
| | | FeB |

The elements are formulated in ratios which give amorphous materials; generally the additional constituent(s) which induce amorphousness in the normally crystalline metal or alloy, such as B, Si, Ti, Zn, Be, P, C, etc., will be present in the range of from about 15 to 35 at.%.

Specific materials which have actually been prepared and tested for corrosion rate and uniformity include $(FeB_{19})_{92}Cr_8$, $CoTi_{26}$ and $FeSi_{25}$. Numerical subscripts designate atomic percentage (at.%) of the element in the alloy.

It is believed that the invention will be particularly useful in batteries incorporating thin metallic film electrodes.

Batteries using the electrode material of this invention have not actually been constructed, but those of ordinary skill in the art will readily know how to substitute these new electrode materials in a variety of conventional battery structures.

An object of this invention, therefore, is to provide metallic electrode materials which are less susceptible to gross electrode material loss due to corrosion, and therefore are characterized by extended life.

Another object of the invention is to provide superior thin film battery electrodes which comprise metallic electrode materials.

A further object of the invention is to provide battery electrode material which is more resistant to pitting corrosion and corrosion associated with crystal structure, and which, although corroding at a similar rate to crystalline metallic electrode material, exhibits extremely uniform corrosion and hence longer life.

An additional object fo the invention is to provide amorphous thin metallic electrode films which are resistant to irregular corrosive attack allowing use of less electrode material in a battery of given useful life and permitting savings in a raw materials and battery weight.

A further object of the invention is to provide amorphous thin metallic electrode films which allows for higher densities of electrode packing and equivalent power in smaller volume.

## Detailed Description of the
## Preferred Embodiment of the Invention

The metal alloy electrode materials of this invention may be prepared by conventional sputtering or electron beam co-evaporation procedures.

## Example

On a silicon substrate on which had been thermally grown a silicon dioxide layer about 1000Å thick there was sputtered a crystalline alloy film of $FeCr_{8.6}$.

A crystalline alloy film of $FeCr_{8.6}$ was prepared as follows:

Sputtering was conducted using a 1000 V D.C. bias in a pressure of 20 microns of argon at a rate of 6Å/min. A film about 1000Å was deposited. The $FeCr_{8.6}$ film showed a corrosion rate in a mild solution of sulfuric acid (pH about 3) of nearly $10^{-5} A/cm^2$.

A similarly prepared film of $(FeB_{19})_{92}Cr_8$, rendered amorphous by the addition during sputtering of boron, showed a very similar corrosion rate, but the nature of the surface attack is dramatically altered. Where the $FeCr_{8.6}$ crystalline film showed pronounced attack at grain boundaries and crystallographic effects, its amorphous counterpart, $(FeB_{19})_{92}Cr_8$, showed a surface indistinguishable from a fresh uncorroded surface.

Rendering the metallic electrode material amorphous slows down the rate of non-uniform dissolution of the electrode during operation of the battery. The result is that the surface of the electrode remains smooth during the process of dissolution. This is believed to result because the grain boundaries in conventional crystalline metallic electrodes permit attack along grain boundaries extending down into the electrode, and produce perforations which destroy the electrode prematurely.

Claims:

1.    A battery electrode characterized in that it comprises a metallic material having alloyed therewith an amount of one or more amorphousness inducing constituents such that, upon exposure to corosive dissolution during battery operation, non-uniform dissolution of the electrode is substantially retarded.

2.    The battery electrode of claim 1, wherein said metallic material is one selected from the group consisting of Ni, Pb, Zn, Fe, Mg, Ag, Co, and alloys thereof.

3.    The battery electrode of claim 1, wherein said amorphousness inducing constituent is one selected from the group consisting of B, Zn, C, Be, P, and mixtures thereof.

4.    The battery electrode of claim 3, wherein said amorphousness inducing constituent or constituents are alloyed with said metallic material in an amount of from about 15 to 35 at.%.

5.    The battery electrode of claim 1, wherein said electrode is in the form of a film.

6.    The battery electrode of claim 1, wherein said metallic material is selected from the group consisting of Fe and alloys thereof and said amorphousness inducing constituent is Si present in an amount of from about 15-35 at.%.

7.    The battery electrode of claim 1, wherein said metallic material is selected from the group consisting of Co and alloys thereof and said amorphousness inducing constituent is Ti present in an amount of from about 15-35 at.%.

| DOCUMENTS CONSIDERED TO BE RELEVANT | | | EP 84101273.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | <u>GB - A - 2 032 167</u>(SOUTH AFRICAN INVENTIONS)<br>* Tables 1-4 *<br>-- | 1-4,6 | H 01 M 4/36<br>H 01 M 4/58//<br>C 23 C 13/00 |
| A | <u>GB - A - 1 588 950</u> (SIEMENS)<br>* Page 1, lines 14-74 *<br>-- | 1,3,5 | |
| D,A | <u>US - A - 2 013 379</u> (DRUMM et al.)<br>---- | 1 | |
| | | | **TECHNICAL FIELDS SEARCHED (Int. Cl. ³)**<br><br>H 01 M<br>C 23 C |

The present search report has been drawn up for all claims

| Place of search | Date of completion of the search | Examiner |
|---|---|---|
| VIENNA | 06-07-1984 | LUX |